# EUROPEAN PATENT SPECIFICATION

(11) **EP 4 130 688 B1**
(45) Date of publication and mention of the grant of the patent: **17.07.2024**
(21) Application number: 22165600.2
(22) Date of filing: 30.03.2022
(51) Int. Cl.: A47J 31/40, G07F 11/00, G07F 11/24, G07F 11/44, G01F 13/00, G07F 13/06

(54) **MACHINE FOR DISPENSING COFFEE OR THE LIKE**
MASCHINE ZUM AUSGEBEN VON KAFFEE ODER DERGLEICHEN
MACHINE DE DISTRIBUTION DE CAFÉ OU SIMILAIRE

(30) Priority: 03.08.2021 IT 202100020882
(43) Date of publication of application: 08.02.2023
(73) Proprietor: Bianchi Industry S.p.a., Frazione Zingonia (IT)
(72) Inventor: ZAVATTI, Marco, 24040 CASTEL ROZZONE BG (IT)
(74) Representative: Modiano, Micaela Nadia

(56) References cited:
- CN-A- 109 389 755
- US-A1- 2014 107 835

## Description

The present invention relates to a machine for dispensing coffee or the like.

In the field of dispensing machines for infusion beverages and the like, such as coffee, said machines are provided with a container or box for sugar or, more generally, sweetener which, by means of a gearmotor and a conveyance chute, doses a predefined quantity of sugar directly into the cup into which the beverage has been dispensed.

Currently, it is not possible to have multiple types of sugar installed in the same container or box which can be selected by the consumer depending on his/her preferences.

In fact, it is a task of the maintenance operator to load the sweetener box with a predefined single and specific sweetener.

The aim of the present invention is to provide a machine for dispensing coffee or the like that is capable of dispensing beverages sweetened with different sweeteners depending on the preferences of the user.

Within this aim, an object of the present invention is to provide a machine for dispensing coffee or the like that can be configured in such a manner as to be able to operate with a single sweetener, like machines of the traditional type, or multiple sweeteners at the discretion of the maintenance operator.

Another object of the present invention is to provide a machine for dispensing coffee or the like that is capable of ensuring the correct dose of sweetener depending on the choices of the user.

US 2014/ 107835 and CN 109 389 755 disclose dispensing machines for dispensing coffee or the like with modular dispensing containers.

A further object of the present invention is to provide a machine for dispensing coffee or the like that is capable of giving the greatest assurances of reliability and safety in use.

Not least object of the present invention is to provide a machine for dispensing coffee or the like that can be provided by means of per se known technologies and therefore has low provision costs.

This aim and these and other objects that will become better apparent hereinafter are achieved by a machine for dispensing coffee or the like, comprising at least one box adapted to contain a sweetener for beverages and the like and associated with a gearmotor which is functionally connected to a control and management unit for dispensing a preset quantity of sweetener, said at least one box forming a dispensing outlet which leads into at least one conveyance chute and said gearmotor comprising dosage means which operate at said dispensing outlet in order to define said preset quantity of sweetener in a manner which is proportional to the operating time of said gearmotor; wherein it comprises a supporting frame which forms an accommodation seat for said at least one box which is provided with a battery of mechanical and electronic couplings for dividing said accommodation seat and for the modular and selective installation of one or more boxes as a replacement of said at least one box; said boxes being provided with gearmotors, dosage means and dispensing outlets which are mutually independent, with said dispensing outlets converging into said at least one conveyance chute. Said mechanical and electronic couplings comprise at least one engagement tooth, which is formed by each one of said gearmotors, and a portion of said supporting frame which are shaped so that they can be mutually joined and at least one snap-acting tooth, which is formed by each one of said gearmotors, and a plurality of engagement seats, which are formed by said supporting frame and are shaped so that they can be mutually engaged in a forced manner by elastic deformation of said snap-acting teeth.

Further characteristics and advantages of the invention will become better apparent from the description of a preferred but not exclusive embodiment of a machine for dispensing coffee or the like, illustrated by way of non-limiting example with the aid of the accompanying drawings, wherein:
Figure 1 is a perspective view of a first configuration of the dispensing machine, according to the present invention;
Figure 2 is a partially exploded perspective view of the dispensing machine shown in Figure 1;
Figure 3 is an enlarged-scale perspective view of a detail of the dispensing machine shown in Figure 1;
Figure 4 is a perspective view of a second configuration of the dispensing machine, according to the present invention;
Figure 5 is a partially exploded perspective view of the dispensing machine shown in Figure 4;
Figure 6 is an enlarged-scale perspective view of a detail of the dispensing machine shown in Figure 4.

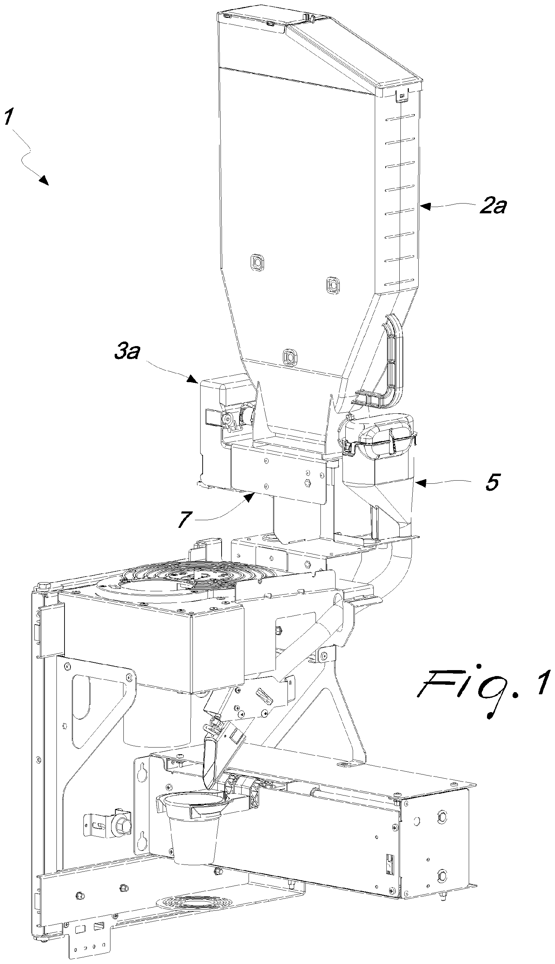

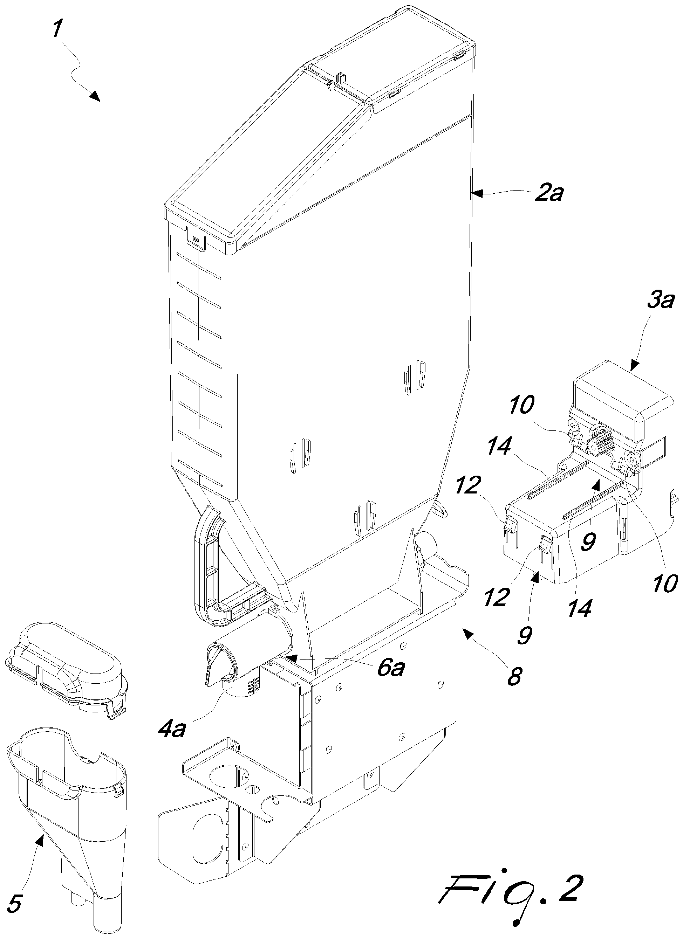

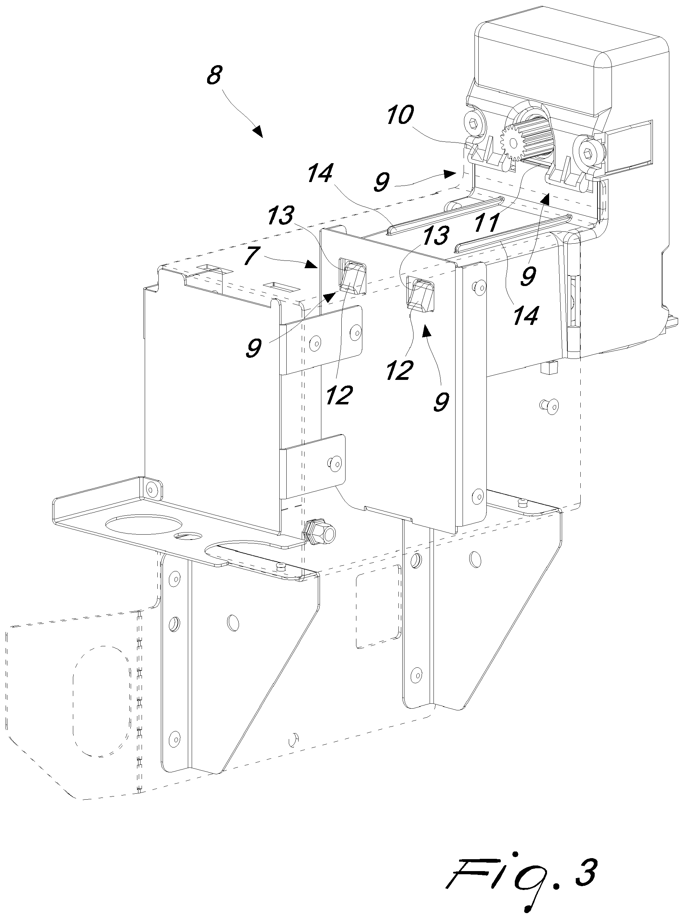

With particular reference to Figures 1 to 3, the machine for dispensing coffee or the like, generally designated by the reference numeral 1, comprises at least one box 2a adapted to contain a sweetener for beverages and the like and associated with a gearmotor 3a which is functionally connected to a control and management unit for dispensing a preset quantity of sweetener.

In greater detail, the box 2a forms a dispensing outlet 4a which leads into at least one conveyance chute 5 and the gearmotor 3a comprises dosage means 6a, which are per se known and therefore not described in detail, and operate at the dispensing outlet 4a to define the preset quantity of sweetener in a manner which is proportional to the operating time of the gearmotor 3a.

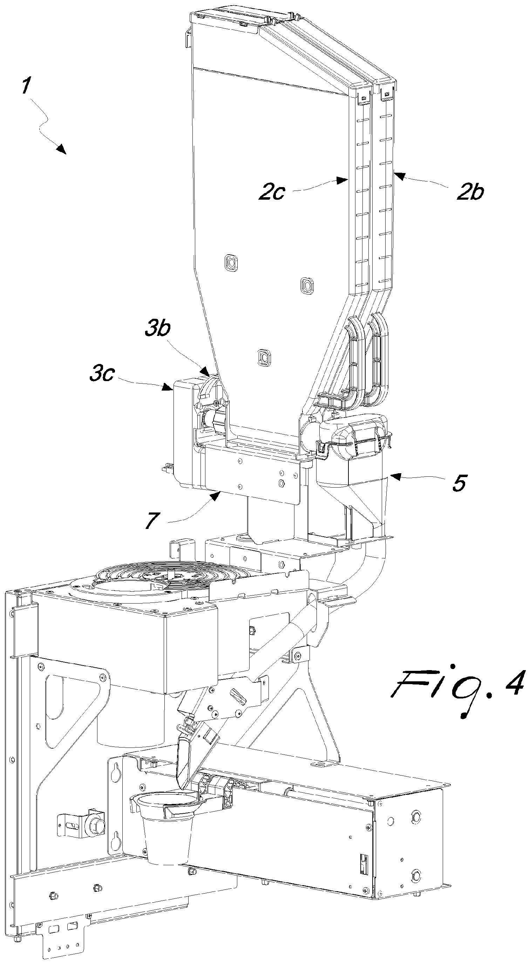

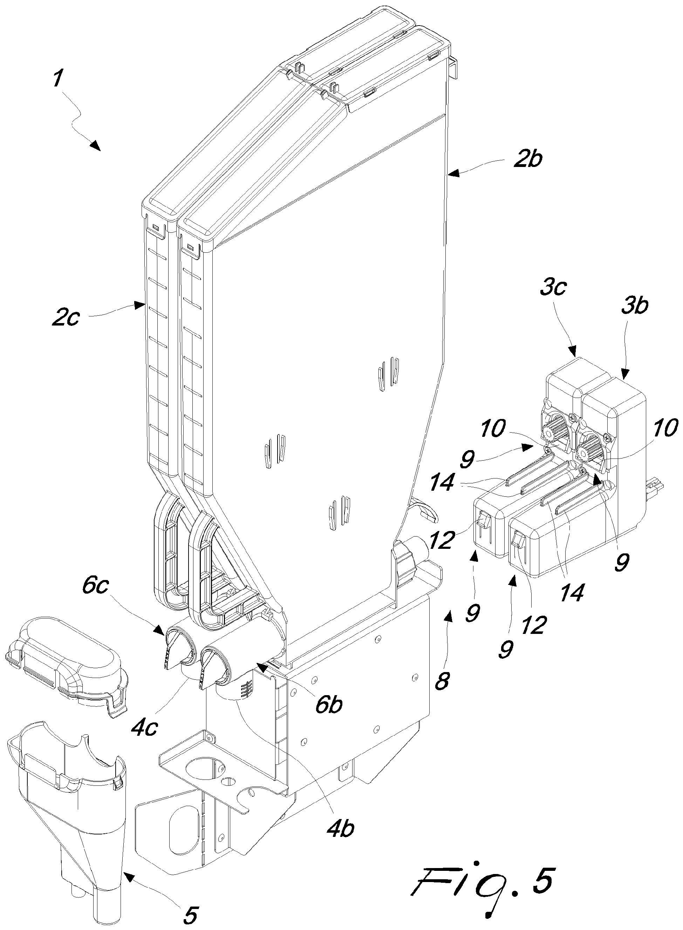

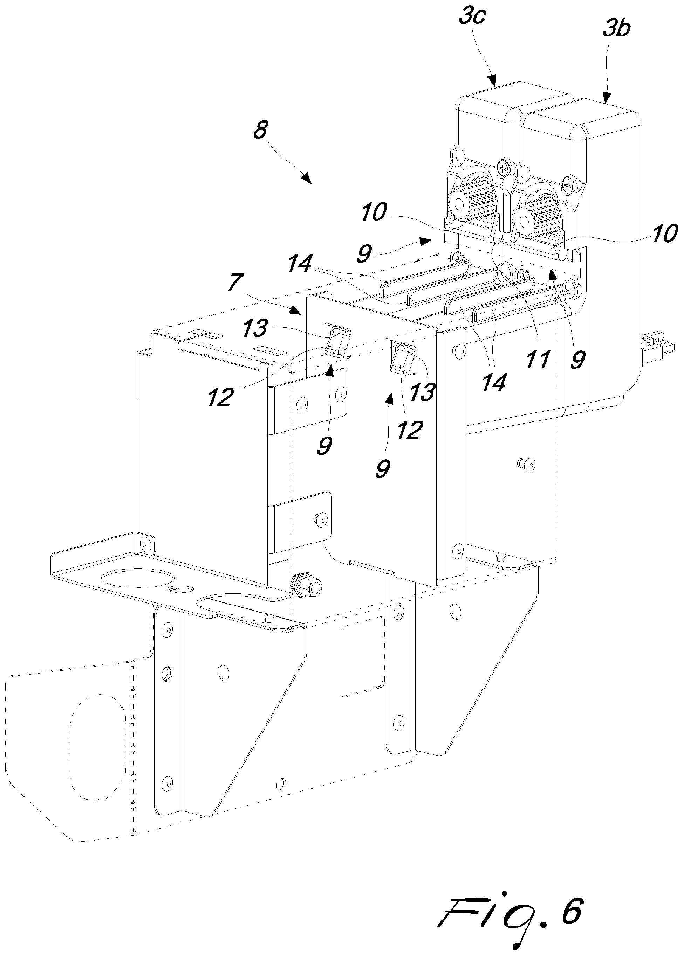

According to the invention, there is a supporting frame 7 which forms an accommodation seat 8 for the box 2a which is provided with a battery of mechanical and electronic couplings 9 for dividing it and for the modular and selective installation of one or more boxes 2b or 2c as a replacement of the single box 2a, as shown in Figures 4 to 6.

In the embodiment shown, the dispensing machine 1 is configured to accommodate at most two boxes 2b and 2c.

However, it is not excluded that in a variation not shown of the dispensing machine 1, the accommodation seat 8 can be divided in order to accommodate more than two boxes 2b and 2c.

Advantageously, such boxes 2b or 2c are provided with gearmotors 3b and 3c, dosage means 6b and 6c, and dispensing outlets 4b and 4c, which are mutually independent, with the dispensing outlets 4b and 4c converging into the conveyance chute 5.

In greater detail, the mechanical and electronic couplings 9 comprise at least one engagement tooth 10, which is formed by each one of the gearmotors 3a, 3b and 3c, and a portion 11 of the supporting frame 7 which are shaped so that they can be mutually joined and at least one snap-acting tooth 12, which is formed by each gearmotor 3a, 3b and 3c, and a plurality of engagement seats 13, which are formed by the supporting frame 7 and are shaped so that they can be mutually engaged in a forced manner by elastic deformation of the snap-acting teeth 12.

The mechanical and electronic couplings 9 further comprise a plurality of electrical connections, not shown, which are formed on the supporting frame 7 for the selective connection of the gearmotors 3a, 3b and 3c to the control and management unit.

In greater detail, depending on the number of divisions of the accommodation seat 8, on the number and dimensions of the boxes 2a, 2b and 2c, the gearmotors 3a, 3b and 3c can have a number of mechanical and electronic couplings 9 that is proportional to the number of occupied divisions.

For example, in the proposed embodiment the supporting frame 7 has an accommodation seat 8 divided into two parts.

Therefore, the number of mechanical and electronic couplings 9 formed by the supporting frame 7 is equal to two.

Conveniently, with particular reference to Figures 1 to 3, in which a first configuration of the dispensing machine 1 with a single box 2a of sweetener is shown, the gearmotor 3a also has a number of mechanical and electronic couplings 9 equal to two, so as to correspond to the mechanical and electronic couplings 9 formed by the supporting frame 7.

However, in a variation not shown of the proposed embodiment, the mechanical and electronic couplings 9 formed by the one or more gearmotors may not coincide numerically with those formed by the supporting frame 7, so as to have multiple possible provisions also for different shapes and designs of the supports.

Differently, with particular reference to Figures 4 to 6, in which a second configuration of the dispensing machine 1 with two boxes 2b and 2c of sweetener is shown, the gearmotors 3b and 3c have a single number of mechanical and electronic couplings 9, so as to engage each the respective mechanical and electronic coupling 9 formed by the supporting frame 7.

Conveniently, on the supporting frame 7 and on the boxes 2a, 2b and 2c guides 14 are provided, which are constituted by ribs and respective grooves, for the guided and predefined insertion of the boxes 2a, 2b and 2c in the accommodation seat 8.

Conveniently, in a variation of the proposed embodiment, the mechanical and electronic couplings 9 can comprise alternative fixing means which are completely equivalent to those described so far.

The operation of the dispensing machine 1 according to the present invention is clear and evident from what has been described so far.

In greater detail, in the configuration with a single box 2a, the gearmotor 3a is sized and configured to manage a single product box (which is wide or optionally narrow).

The gearmotor 3a is actuated by the control electronics for a time which is preset and proportional to the dose of sugar to be dispensed.

The dose can be prepared simultaneously with other steps in the automatic dispensing process (for example, coffee grinding) and can be stopped in the sugar release system.

In the configuration with two boxes 2b and 2c, which occupy the exact same space as the single box 2a, the gearmotors 3b and 3c are sized and configured to manage independently the two boxes 2b and 2c.

Like for the single configuration, these are actuated by the control electronics for a time that is preset and proportional to the dose of sugar to be dispensed.

In this case also, the dose can be prepared simultaneously with other steps of the automatic dispensing process (for example, coffee grinding) and stops in the sugar release system.

The maintenance steps, i.e., the steps for replacement of the boxes 2a, 2b and 2c, occur in a simple and easy manner by virtue of the particular and modular shape of the mechanical and electronic couplings 9, by means of which the gearmotors 3a, 3b and 3c can be coupled and locked with a snap action to the supporting frame 7.

In greater detail, the pressure of the snap-acting tooth 12 in the engagement seats 13 allows the disengagement of the corresponding gearmotor 3a, 3b or 3c and therefore a quick reconfiguration of the dispensing machine 1 (for example, switching from the single-box configuration to the two-box configuration or vice versa).

In practice it has been found that the dispensing machine according to the present invention achieves the intended aim and objects, since depending on the configuration chosen by the maintenance operator it can be configured with one or more sweeteners without performing any structural modification, but simply by installing the corresponding preset boxes of sweeteners.

Another advantage of the dispensing machine according to the present invention is that the maintenance operator can quickly configure and/or reconfigure the dispensing machine, thus adapting to the needs of the client even for requirements occurring after installation.

As already mentioned, this versatility is due to the presence of mechanical and electronic couplings, i.e., electrical connectors (and therefore wirings) and mechanical interfaces, for the mounting of the gearmotors and of the boxes in a modular manner, with shared and programmable control electronics that manage the operation of the devices installed in the dispensing machine and/or of an interactive user interface which creates sales proposals in accordance with the machine configuration.

The dispensing machine thus conceived is susceptible of numerous modifications and variations, all of which are within the scope of the appended claims.

All the details may furthermore be replaced with other technically equivalent elements.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) for dispensing coffee or the like, comprising at least one box (2a) adapted to contain a sweetener for beverages and the like and associated with a gearmotor (3a) which is functionally connected to a control and management unit for dispensing a preset quantity of sweetener, said at least one box (2a) forming a dispensing outlet (4a) which leads into at least one conveyance chute (5) and said gearmotor (3a) comprising dosage means (6a) which operate at said dispensing outlet (4a) in order to define said preset quantity of sweetener in a manner which is proportional to the operating time of said gearmotor (3a); a supporting frame (7) forming an accommodation seat (8) for said at least one box (2a) which is provided with a battery of mechanical and electronic couplings (9) for dividing said accommodation seat (8) and for the modular and selective installation of one or more boxes (2b, 2c) as a replacement of said at least one box (2a); said boxes (2b, 2c) being provided with gearmotors (3b, 3c), dosage means (6b, 6c) and dispensing outlets (4b, 4c) which are mutually independent, with said dispensing outlets (4b, 4c) converging into said at least one conveyance chute (5), **characterized in that** said mechanical and electronic couplings (9) comprise at least one engagement tooth (10), which is formed by each one of said gearmotors (3a, 3b, 3c), and a portion (11) of said supporting frame (7) which are shaped so that they can be mutually joined and at least one snap-acting tooth (12), which is formed by each one of said gearmotors (3a, 3b, 3c), and a plurality of engagement seats (13), which are formed by said supporting frame (7) and are shaped so that they can be mutually engaged in a forced manner by elastic deformation of said snap-acting teeth (12).

2. The dispensing machine (1) according to claim 1, **characterized in that** said mechanical and electronic couplings (9) comprise a plurality of electrical connections which are formed on said supporting frame (7) for the selective connection of said gearmotors (3a, 3b, 3c) to said control and management unit.

3. The dispensing machine (1) according to one or more of the preceding claims, **characterized in that** it comprises at least two of said boxes (2b, 2c).

4. The dispensing machine (1) according to one or more of the preceding claims, **characterized in that** it comprises guides (14) for the guided and predefined insertion of said boxes (2a, 2b, 2c) in said accommodation seat (8).

## Patentansprüche

1. Eine Maschine (1) zum Abgeben von Kaffee oder dergleichen, die mindestens einen Kasten (2a) umfasst, der ausgebildet ist, um ein Süßungsmittel für Getränke und dergleichen aufzunehmen, und verbunden mit einem Getriebemotor (3a), welcher funktionell mit einer Steuerungs- und Verwaltungseinheit verbunden ist, um eine vordefinierte Menge Süßungsmittel abzugeben; wobei der mindestens eine Kasten (2a) einen Abgabeauslass (4a) bildet, der in mindestens eine Förderrutsche (5) mündet, und der Getriebemotor (3a) Dosiermittel (6a) umfasst, die an dem Abgabeauslass (4a) arbeiten, um die vordefinierte Menge Süßungsmittel auf eine Art abzugeben, die proportional zur Betriebszeit des Getriebemotors (3a) ist; einen Tragrahmen (7), der einen Aufnahmesitz (8) für den mindestens einen Kasten (2a) bildet, der mit einem Satz mechanischer und elektronischer Kopplungen (9) zum Unterteilen des Aufnahmesitzes (8) und zur modularen und selektiven Installation eines oder mehrerer Kästen (2b, 2c) als Ersatz für den mindestens einen Kasten (2a) ausgestattet ist; wobei die Kästen (2b, 2c) mit Getriebemotoren (3b, 3c), Dosiermitteln (6b, 6c) und Abgabeauslässen (4b, 4c) ausgestattet sind, die voneinander unabhängig sind, wobei die Abgabeauslässe (4b, 4c) in die mindestens eine Förderrutsche (5) zusammenlaufen; **dadurch gekennzeichnet, dass** die mechanischen und elektronischen Kopplungen (9) mindestens einen Eingriffszahn (10) umfassen, der von jedem der Getriebemotoren (3a, 3b, 3c) gebildet ist, und einen Abschnitt (11) des Tragrahmens (7), die so geformt sind, dass sie miteinander verbunden werden können, und mindestens einen Schnappkontaktzahn (12), welcher von jedem der Getriebemotoren (3a, 3b, 3c) gebildet wird, und eine Vielzahl von Eingriffssitzen (13), die von dem Tragrahmen (7) gebildet und so geformt sind, dass sie durch elastische Verformung der Schnappkontaktzähne (12) in erzwungenen Eingriff gebracht werden können.

2. Die Abgabemaschine (1) gemäß Anspruch 1, **dadurch gekennzeichnet, dass** die mechanischen und elektronischen Kopplungen (9) eine Vielzahl elektrischer Verbindungen umfassen, die auf dem Tragrahmen (7) geformt sind, für die selektive Verbindung der Getriebemotoren (3a, 3b, 3c) mit der Steuerungs-und Verwaltungseinheit.

3. Die Abgabemaschine (1) gemäß einem oder mehreren der obigen Ansprüche, **dadurch gekennzeichnet, dass** sie mindestens zwei der Kästen (2b, 2c) umfasst.

4. Die Abgabemaschine (1) gemäß einem oder mehreren der obigen Ansprüche, **dadurch gekennzeichnet, dass** sie Führungen (14) für das geleitete und vordefinierte Einführen der Kästen (2a, 2b, 2c) in den Aufnahmesitz (8) umfasst.

## Revendications

1. Machine (1) de distribution de café ou similaire, comprenant au moins un boîtier (2a) adapté pour contenir un édulcorant pour boissons et similaire et associé à un moteur à engrenages (3a) qui est connecté fonctionnellement à une unité de commande et de gestion pour distribuer une quantité prédéfinie d'édulcorant, ledit au moins un boîtier (2a) formant un orifice de distribution (4a) qui mène dans au moins une goulotte de transport (5) et ledit moteur à engrenages (3a) comprenant des moyens de dosage (6a) qui fonctionnent au niveau dudit orifice de distribution (4a) afin de définir ladite quantité prédéfinie d'édulcorant d'une manière qui est proportionnelle au temps de fonctionnement dudit moteur à engrenages (3a) ; un cadre de support (7) formant un logement pour loger ledit au moins un boîtier (2a) qui est pourvu d'une batterie de couplages mécaniques et électroniques (9) pour diviser ledit logement et pour l'installation modulaire et sélective des un ou plusieurs boîtiers (2b, 2c) en remplacement dudit au moins un boîtier (2a) ; lesdits boîtiers (2b, 2c) étant pourvus de moteurs à engrenages (3b, 3c), de moyens de dosage (6b, 6c) et d'orifices de distribution (4b, 4c) qui sont mutuellement indépendants, lesdits orifices de distribution (4b, 4c) convergeant dans ladite au moins une goulotte de transport (5), **caractérisé en ce que** lesdits couplages mécaniques et électroniques (9) comprennent au moins une dent de prise (10), qui est formée par chacun desdits moteurs à engrenages (3a, 3b, 3c), et une partie (11) dudit cadre de support (7) qui sont formés de telle manière qu'ils peuvent être joints mutuellement et au moins une dent à déclic (12), qui est formée par chacun desdits moteurs à engrenages (3a, 3b, 3c), et une pluralité de sièges de prise (13), qui sont formés par ledit cadre de support (7) et sont formés de telle manière qu'ils peuvent être mutuellement en prise d'une manière forcée par déformation élastique desdites dents à déclic (12).

2. Machine de distribution (1) selon la revendication 1, **caractérisée en ce que** lesdits couplages mécaniques et électroniques (9) comprennent une pluralité de connexions électriques qui sont formées sur ledit cadre de support (7) pour la connexion sélective desdits moteurs à engrenages (3a, 3b, 3c) à ladite unité de commande et de gestion.

3. Machine de distribution (1) selon une ou plusieurs des revendications précédentes, **caractérisée en ce qu'**elle comprend au moins deux desdits boîtiers (2b, 2c).

4. Machine de distribution (1) selon une ou plusieurs des revendications précédentes, **caractérisée en ce qu'**elle comprend des guides (14) pour l'insertion guidée et prédéfinie desdits boîtiers (2a, 2b, 2c) dans ledit logement.
